# EUROPEAN PATENT APPLICATION

(11) **EP 4 552 920 A1**
(43) Date of publication of application: **14.05.2025**
(21) Application number: 24831929.5
(22) Date of filing: 25.06.2024
(51) Int. Cl.: B60N 2/58, A47C 31/11, B60R 13/02

(54) **VEHICLE INTERIOR SKIN MATERIAL AND VEHICLE SEAT**

(30) Priority: 30.06.2023 JP 2023108350
(71) Applicant: TS Tech Co., Ltd., Asaka-shi Saitama 351-0012 (JP)
(72) Inventor: TAKAHASHI Junichi, Shioya-gun, Tochigi 329-1217 (JP); ISHII Kazushige, Shioya-gun, Tochigi 329-1217 (JP)
(74) Representative: Potter Clarkson
(86) International application number: PCT/JP2024/022933
(87) International publication number: WO 2025/005069

(57) **Abstract**

In order to provide a vehicle interior skin material which has strength, suppresses the occurrence of wrinkles on the surface, and can cover a three-dimensional object in a state of excellent appearance, a vehicle interior skin material 10 is a laminate in which a backing fabric 1 is bonded to a base material, the vehicle interior skin material 10 being configured such that, with respect to the shear characteristics of the laminate, all of the conditions of a shear angle of 6.4 [degree] to 8.0 [degree] inclusive, and a load of 17.5 [gf/cm] or less are satisfied. Thus, the vehicle interior skin material suppresses the occurrence of wrinkles on the surface while exhibiting an appropriate strength, and can cover a three-dimensional object in a state of excellent appearance.

## Description

### TECHNICAL FIELD

The present invention relates to vehicle interior skin materials used as skins for vehicle interiors and vehicle seats.

### BACKGROUND ART

Genuine leather, artificial leather, cloth, and the like are often used as vehicle interior skin materials.

Conventionally, by defining an appropriate range for shear rigidity values, bending rigidity values, and tensile strain for vehicle interior skin materials using natural leather or synthetic leather, the occurrence of creases is suppressed, and the surface of a three-dimensional object is covered with excellent appearance (see Patent Document 1, for example).

### CITATION LIST

### Patent Literature

Patent Document 1: JP 2016-185721A

### SUMMARY OF INVENTION

### Technical Problem

However, the skin material in Patent Document 1 is effective in reducing creases that occur on the skin material, but this was not sufficient.

In other words, conventional technology can reduce creases occurring on the skin material by setting the strength of the skin material to a low level, but it is difficult to sufficiently meet the requirement of reducing creases occurring on the skin material while satisfying the required strength.

For example, when the skin material has a laminated structure, it is easier to improve strength, but in that case, followability to curved surfaces and peripheral surfaces decreases, creases occur on the back side, and furthermore, there are cases where creases also occur on the surface.

The purpose of the present invention is to provide a vehicle interior skin material and a vehicle seat that suppress the occurrence of creases while ensuring strength.

### Solution to Problem

The invention described in claim 1 is a vehicle interior skin material, wherein
the vehicle interior skin material is a laminated body with a back base cloth bonded to a base material, and
regarding shear characteristics of the laminated body, the vehicle interior skin material satisfies all conditions that
a shear angle is 6.4 [degree] or more and 8.0 [degree] or less, and
a load is 17.5 [gf/cm] or less.

The invention described in claim 2 is the vehicle interior skin material according to claim 1, wherein the back base cloth is composed of a processed yarn.

The invention described in claim 3 is the vehicle interior skin material according to claim 1, wherein the back base cloth is a warp knitted fabric composed of a warp yarn.

The invention described in claim 4 is the vehicle interior skin material according to claim 1, wherein the warp yarn has a total fineness of 75 denier or more and 100 denier or less.

The invention described in claim 5 is a vehicle seat, wherein
the vehicle seat is covered with the vehicle interior skin material according to claim 1 at at least a position facing a built-in occupant protection device.

The invention described in claim 6 is the vehicle seat according to claim 5, wherein
part or all of a cushion pad at the position facing the occupant protection device is covered with the vehicle interior skin material.

The invention described in claim 7 is the vehicle seat according to claim 5, wherein
a mounted occupant support device is covered with the vehicle interior skin material.

The invention described in claim 8 is the vehicle seat according to claim 5, wherein
a bulge is covered with a skin formed by a plurality of sewing lines, and at least part of the skin is composed of the vehicle interior skin material.

### Advantageous Effects of Invention

The vehicle interior skin material described in claim 1 suppresses the occurrence of creases by setting the shear angle and load within an appropriate numerical range described above with respect to the shear characteristics of the laminated body, and can cover the surface of a three-dimensional object with excellent appearance.

Also, as long as the shear angle and load are within an appropriate numerical range described above, the vehicle interior skin material can suppress the occurrence of creases and cover the surface of the object even if the strength of the skin material is not set low, so it is possible to maintain high strength. Also, since it consists of a laminated body with a back base cloth bonded to the base material, it is also possible to maintain high strength of the vehicle interior skin material with the back base.

Since the vehicle interior skin material described in claim 2 has the back base cloth composed of processed yarns, it is easy to impart elasticity to the vehicle interior skin material, and the occurrence of creases caused by the back base cloth can be reduced.

Since the vehicle interior skin material described in claim 3 is a warp knitted fabric with a back base cloth composed of warp yarns, it is possible to ensure elasticity in a predetermined direction while maintaining strength with a strong weave, and improve bending processability.

The vehicle interior skin material described in claim 4 has a fineness of 75 denier or more and 100 denier or less for all warp yarns. Thereby, it is possible to have moderate bending processability while ensuring high strength.

The vehicle seat described in claim 5 is covered with the vehicle interior skin material at at least a position facing the built-in occupant protection device.

Thus, since the surface of the vehicle seat is covered while suppressing the occurrence of creases, it is possible to maintain a high appearance design.

Furthermore, due to the shear characteristics and elasticity of the vehicle interior skin material, strength is moderately exhibited even when the occupant protection device is operated, so the vehicle interior skin material is not destroyed, the posture of the occupant protection device can be maintained and operated properly, and its function can be exhibited normally and effectively.

In the vehicle seat described in claim 6, since the vehicle interior skin material covers part or all of the cushion pad at a position facing the occupant protection device, the vehicle interior skin material is effectively resistant to the pressurization applied through the cushion pad during operation of the occupant protection device, and the function of the occupant protection device can be exhibited normally and effectively.

Since the vehicle seat described in claim 7 covers a mounted occupant support device with the vehicle interior skin material described above, the vehicle interior skin material can perform covering while suppressing the occurrence of creases in response to irregularities deformed by the occupant support device.

Since the vehicle seat described in claim 8 contains the vehicle interior skin material in part of the skin formed by a plurality of sewing lines covering the bulge, the shear characteristics of the vehicle interior skin material suppress the occurrence of creases on the entire skin, enabling covering while maintaining followability to the surface of the bulge. Also, since the use of vehicle interior skin materials is partially suppressed, it is possible to reduce manufacturing costs of the skin.

### BRIEF DESCRIPTION OF DRAWINGS

[FIG. 1] This is a cross-sectional view of a vehicle interior skin material as the present embodiment.
[FIG. 2] This is an explanatory diagram of how to measure shear characteristics of the vehicle interior skin material.
[FIG. 3] This is a line diagram showing the relationship between the shear angle and the shear load that change in response to each other in an ideal sample.
[FIG. 4] This is a list diagram showing the type of yarn, yarn thickness, yarn knitting method, density, and processing conditions for the back base cloth of samples (1) to (15).
[FIG. 5] This is a chart showing the shear angle, shear load, and crease occurrence state of samples (1) to (15).
[FIG. 6] This is a line diagram plotting the shear angle and shear load values for samples (1) to (15).
[FIG. 7] This is a list diagram showing the state of samples (2) to (15) wrapped around a core viewed from the center line direction and the state thereof viewed from the outside in the radial direction.
[FIG. 8] This is a cross-sectional view of a comparative example of a vehicle interior skin material.
[FIG. 9] This is a diagram showing shear stiffness of samples (1) to (15).
[FIG. 10] This is a line diagram plotting the horizontal and vertical shear stiffness values of samples (1) to (15).
[FIG. 11] This is a diagram showing tensile strain of samples (1) to (15).
[FIG. 12] This is a line diagram that plots the horizontal and vertical tensile strain of samples (1) to (15) .
[FIG. 13] This is a perspective view of a car seat to which a car interior skin material has been applied.
[FIG. 14] This is a cross-sectional view of a car seat along the A-A line in FIG. 13.

### DESCRIPTION OF EMBODIMENTS

Below, a preferred form for implementing the present invention is explained using drawings. However, although various technically favorable restrictions are attached to the embodiments described below for implementing the present invention, the scope of the invention is not limited to the following embodiments and diagram examples.

The present embodiment exemplifies a vehicle interior skin material and a vehicle seat to which it is applied as a covering material.

Vehicles to which the vehicle interior skin material and vehicle seat are applied, as shown below, include all vehicles on which humans board and move, such as ships, flying bodies, cars, and the like, but in the present embodiment, a case where a vehicle interior skin material and a vehicle seat are applied to an automobile is exemplified.

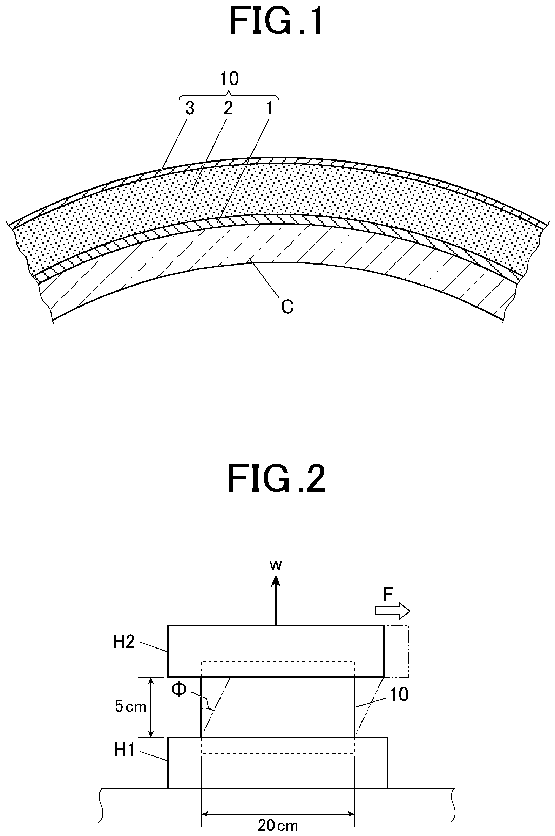

FIG. 1 is a cross-sectional view of a vehicle interior skin material 10.

As shown, the vehicle interior skin material 10 has a three-layer structure consisting of a back base cloth 1 serving as a lining, a foam layer 2 composed of a urethane slab formed on the back base cloth 1, and a PVC top layer 3 formed on the foam layer 2.

The vehicle interior skin material 10 is used, for example, as a covering material for the surface of a vehicle seat or as a skin material for the interior of a vehicle, and during use, the top layer 3 is directed to the surface side. Note that code C in the figure is a core around which the vehicle interior skin material 10 is wrapped.

The back base cloth 1 is formed from warp knitted polyester processed yarn.

The foam layer 2 is a urethane slab composed of foamed urethane with a density of 0.022 and a residual pressure of 3 [t] (thickness).

The top layer 3 uses PVC as a raw material, and no foam treatment is performed.

The vehicle interior skin material 10 is integrated by bonding the back base cloth 1, foam layer 2, and top layer 3 in a laminated state by frame laminating.

As for the shear characteristics of the vehicle interior skin material 10, when the load showing shear angle and shear force is within the numerical range specified for each, the vehicle interior skin material 10 that covers the three-dimensional surface smoothly follows the curved surface of the three-dimensional surface, deforms and adheres closely to the curved surface of the three-dimensional surface, and the occurrence of creases, and the like, is suppressed.

### [Method For Measuring Shear Characteristics]

Here, a method for measuring the shear characteristics described above will be explained.

As shown in FIG. 2, both ends of the sample of the vehicle interior skin material 10 are held by chucks H1 and H2, respectively, in a band with a width of 20 [cm] in the left and right direction.

At this time, a gap of 5 [cm] is secured between the chuck H1 and the chuck H2, and measurements are performed on the vehicle interior skin material 10 in the range of 20 [cm] width in the left and right direction and 5 [cm] length in the vertical direction. That is, the vehicle interior skin material 10 has a length equal to or greater than the length of 5 [cm] in the vertical direction plus the respective pinches for the chuck H1 and chuck H2.

A constant tensile load W (=10 [gf/cm]) is applied to the two chucks H1 and H2 in the direction where one is separated from the other (direction parallel to the plane of the vehicle interior skin material 10 and orthogonal in the width direction: vertical direction in FIG. 2).

While maintaining this tensile load W constant, a shear load F is applied by moving the chuck H2 to one side (forward direction, for example, to the right in FIG. 2) in the width direction (left and right direction in FIG. 2) so as to maintain a constant shear rate (for example, 0.417 [mm/sec]) .

Then, changes in shear angle φ [° (degree)] occurring in the vehicle interior skin material 10 and the load F are measured.

In the above measurement, the shear angle φ gradually increases, and creases occur in the vehicle interior skin material 10 at some point.

Using the point at which this crease occurs as the limit, the chuck H2 is now made back and moved in the opposite direction (left in FIG. 2), and a shear load F is applied in the opposite direction. Even in this case, the shear rate is kept constant.

When creases occur in the vehicle interior skin material 10 due to movement of the chuck H2 in the opposite direction, the chuck H2 is made back again and moved in the forward direction (right in FIG. 2). Even in this case, the shear rate is kept constant.

Then, it passes through a point where the shear angle φ becomes 0, and measurement of the shear load F is terminated when the shear angle φ of 1 to 2 [°] occurs in the opposite direction.

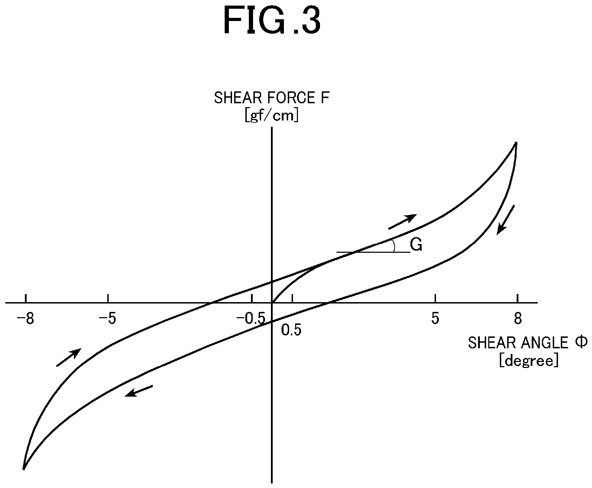

FIG. 3 is a line diagram showing the relationship between the shear angle φ and the shear load F, which changes in response to each other, obtained by measuring the shear characteristics described above for an ideal sample. The horizontal axis indicates the shear angle φ, and the vertical axis indicates the shear load F. The shear angle φ indicates a positive slope to the right and a negative slope to the left. Shear load F indicates that the load applied to the right to the upper end part of the sample is positive, and the load applied to the left is negative.

The arrow in FIG. 3 indicates the changing direction of the detection point obtained by the measurement operation described above.

As shown in the figure, soon after the chuck H2 moves to the right due to the start of measurement, the values of the shear angle φ and shear load F increase in a state where the slope indicating the change in shear load F with respect to the shear angle φ is generally constant, and the slope increases just before creases occur. Then, as creases occur, the direction of movement of the chuck H2 is reversed. Thus, when creases occur, the shear load F is maximum within the measurement range.

Then, when the chuck H2 is reversed to the left, the slope of the shear load F with respect to the shear angle φ immediately after the reversal shows a large downward slope, and thereafter, the shear angle φ and shear load F are reduced in a state where the slope is generally constant.

Then, just before the second crease occurs, the downward slope increases, and as creases occur, the direction of movement of the chuck H2 is reversed again. Thus, when the crease occurs, the shear load F is minimal within the measurement range.

Then, when the chuck H2 is reversed to the right, the slope of the shear load F with respect to the shear angle φ shows a large increasing slope immediately after the reversal, and thereafter, the shear angle φ and shear load F increase in a state where the slope is generally constant.

As shown in the figure, the change in shear load F with respect to the shear angle φ causes hysteresis in the forward and opposite directions of the shear load F, however, the slope is generally constant, excluding before and after the occurrence of creases.

Note that the slope dF/dφ of the shear load F with respect to the shear angle φ is called shear stiffness G. The average value of shear stiffness G over the entire range of measurements described above is one of the indicators showing the shear characteristics of the sample. If the numerical value of shear stiffness G is large, shear deformation is unlikely to occur, and if the numerical value of shear stiffness G is small, it can be said that it is a material where shear deformation is likely to occur.

The vehicle interior skin material 10 of the present invention satisfies the conditions where the absolute value of the shear angle φ is 6.4 [degree] or more and 8.0 [degree] or less just before creases occur or when creases occur, and the absolute value of shear load F at that time is 17.5 [gf/cm] or less.

When the shear angle φ described above and the shear load F above fall within the numerical range defined for each, the vehicle interior skin material 10 follows the curved surface of the three-dimensional surface, deforms and adheres closely, and can cover the three-dimensional shape in a state where the occurrence of creases is sufficiently reduced.

The vehicle interior skin material 10 achieves the above shear characteristics by selecting the material of the back base cloth 1. In other words, shear characteristics can be adjusted depending on the type of yarn, yarn thickness, yarn knitting method, density, and the like of the back base cloth 1.

### [Measurement of Tensile Strain]

Also, tensile strain is measured for the vehicle interior skin material 10 as a reference.

Tensile strain holds both ends of a 20 [cm] wide band sample of the vehicle interior skin material 10 with chucks H1 and H2, securing a gap of 5 [cm] with chucks H1 and H2, respectively, in the same way as when measuring shear characteristics. Then, a tensile load is applied to the vehicle interior skin material 10 in the direction where one of the chucks H1, H2 is separated from the other (direction parallel to the plane of the vehicle interior skin material 10 and orthogonal to the width direction: vertical direction in FIG. 2), and tensile strain occurring in the vertical direction is measured.

The tensile load is applied while gradually increasing from 0 to a maximum of 500 [gf/cm], and the strain rate is maintained at 4.00 × 10⁻³/sec.

Then, the amount of strain in the tensile direction when the maximum tensile load of 500 [gf/cm] is reached is measured, and the ratio to the original length calculated as a percentage is the tensile strain εₘ.

### Example 1

### [About Sample]

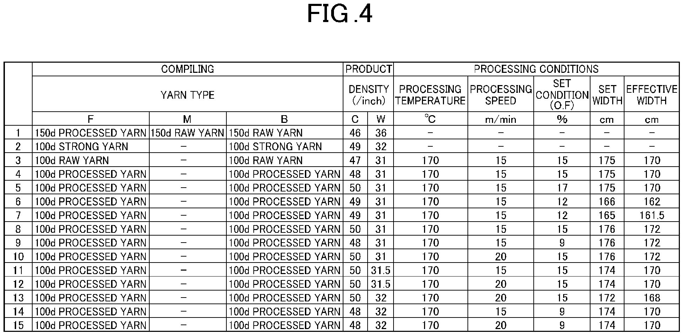

Next, for samples (1) to (3), which are comparative examples consisting of vehicle interior skin materials using a conventional back base cloth, and samples (4) to (15), which are examples of the present invention consisting of a vehicle interior skin material using a novel back base cloth, the type of yarn, yarn thickness, yarn knitting method, density, processing conditions, and the like of each back base cloth used are shown in a list in FIG. 4.

Note that the same top layer and foam layer other than the back base cloth are used for vehicle interior skin materials for samples (1) to (15). The foam layer is a foam treated urethane slab with a density of 0.022 and a residual pressure of 3 [t], and the top layer consists of an unfoamed layer using PVC as a raw material.

First, I will explain the back base cloth of the comparative example.

The sample (1) is a warp knitted fabric using a 3-bar tricot knitting machine using processed yarn with a fineness of 150 denier for the front (F), raw yarn with a fineness of 150 denier for the middle (M), and raw yarn with a fineness of 150 denier for the back (B). The processed yarn is polyester processed yarn.

Density C indicates the number of stitches per inch in the vertical direction (direction along the warp yarn) and is 46. Density W indicates the number of stitches per inch in the horizontal direction (direction orthogonal to the warp yarn) and is 36.

The sample (2) is a warp knitted fabric using a 3-bar tricot knitting machine using strong yarn with a fineness of 100 denier for the front (F), no middle (M), and strong yarn with a fineness of 100 denier for the back (B). Strong yarn is a strong polyester yarn. The density C is 49 and the density W is 32.

The sample (3) is a warp knitted fabric using a 3-bar tricot knitting machine using raw yarn with a fineness of 100 denier for the front (F), no middle (M), and raw yarn with a fineness of 100 denier for the back (B). The density C is 47 and the density W is 31.

The processing conditions are: the processing temperature is 170 [°C], the processing speed is 15 [m/min], the set condition is 15 [%], the set width is 175 [cm], and the effective width is 170 [cm].

Hereafter, the back base cloth of an example of the invention will be explained.

The sample (4) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 48 and the density W is 31.

The processing conditions are: the processing temperature is 170 [°C], the processing speed is 15 [m/min], the set condition is 15 [%], the set width is 175 [cm], and the effective width is 170 [cm].

The sample (5) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 50 and the density W is 31.

The processing conditions are: the processing temperature is 170 [°C], the processing speed is 15 [m/min], the set condition is 17 [%], the set width is 175 [cm], and the effective width is 170 [cm].

The sample (6) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 49 and the density W is 31.

The processing conditions are: the processing temperature is 170 [°C], the processing speed is 15 [m/min], the set condition is 12 [%], the set width is 166 [cm], and the effective width is 162 [cm].

The sample (7) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 49 and the density W is 31.

The processing conditions are: the processing temperature is 170 [°C], the processing speed is 15 [m/min], the set condition is 12 [%], the set width is 165 [cm], and the effective width is 161.5 [cm].

The sample (8) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 50 and the density W is 31.

The processing conditions are: the processing temperature is 170 [°C], the processing speed is 15 [m/min], the set condition is 15 [%], the set width is 176 [cm], and the effective width is 172 [cm].

The sample (9) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 48 and the density W is 31.

The processing conditions are: the processing temperature is 170 [°C], the processing speed is 15 [m/min], the set condition is 9 [%], the set width is 176 [cm], and the effective width is 172 [cm].

The sample (10) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 50 and the density W is 31.

The processing conditions are: the processing temperature is 170 [°C], the processing speed is 20 [m/min], the set condition is 15 [%], the set width is 176 [cm], and the effective width is 172 [cm].

The sample (11) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 50 and the density W is 31.5.

The processing conditions are: the processing temperature is 170 [°C], the processing speed is 15 [m/min], the set condition is 15 [%], the set width is 174 [cm], and the effective width is 170 [cm].

The sample (12) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 50 and the density W is 31.5.

The processing conditions are: the processing temperature is 170 [°C], the processing speed is 20 [m/min], the set condition is 15 [%], the set width is 174 [cm], and the effective width is 170 [cm].

The sample (13) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 50 and the density W is 32.

The processing conditions are: the processing temperature is 170 [°C], the processing speed is 20 [m/min], the set condition is 15 [%], the set width is 172 [cm], and the effective width is 168 [cm].

The sample (14) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 48 and the density W is 32.

The processing conditions are: the processing temperature is 170 [°C], the processing speed is 15 [m/min], the set condition is 9 [%], the set width is 174 [cm], and the effective width is 170 [cm].

The sample (15) is a warp knitted fabric using a 3-bar tricot knitting machine using processed yarn with a fineness of 100 denier for the front (F), no middle (M), and processed yarn with a fineness of 100 denier for the back (B). The processed yarn is polyester processed yarn. The density C is 48 and the density W is 32.

The processing conditions are: the processing temperature is 170 [°C], the processing speed is 20 [m/min], the set condition is 9 [%], the set width is 174 [cm], and the effective width is 170 [cm].

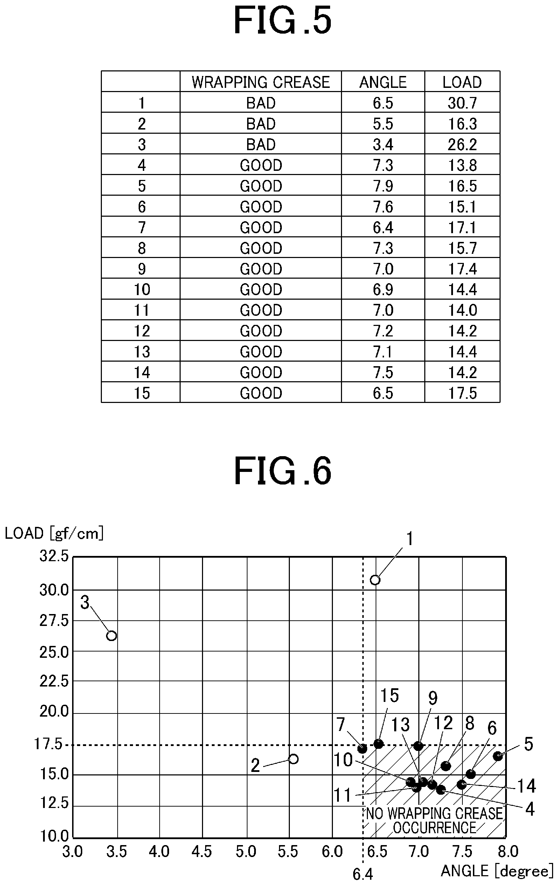

[Relationship Between Occurrence Of Creases And Shear Load And Shear Angle Of Each Sample] For vehicle interior skin materials using samples (1) to (3), which are comparison examples above, and samples (4) to (15), which are examples of the present invention, respectively, as the back base cloth, shear angle φ and shear load F are measured according to the method for measuring shear characteristics described above, and values of shear angle φ and shear load F when creases occur or just before they occur are listed in FIG. 5.

As for the values shown in FIG. 5, the values of the shear angle φ and shear load F are average values of absolute values of respective measurement values when shear load F in the forward direction (FIG. 2 right direction) and reverse direction (FIG. 2 left direction) is added.

Furthermore, here, measurements were performed in the horizontal and vertical directions of the vehicle interior skin material, and measurements were performed for each. In a case where the direction along the warp knitted warp yarn of the back base cloth is referred to as vertical, the horizontal refers to the case where shear characteristics are measured by holding both ends in the direction orthogonal to this with chucks H1, H2, and the vertical direction indicates a case where shear characteristics are measured by holding both ends in the direction along the warp knitted warp yarn with chucks H1, H2. The values shown in FIG. 5 are average values when measured horizontally and vertically.

Also, the vehicle interior skin material for each sample (1) to (15) was wrapped around the outer circumference of a core C (see FIG. 1) with an outer diameter of 76 [cm], and test results confirming the occurrence of creases at that time were described in the "wrapping crease" column in FIG. 5. "GOOD" indicates "no creases occur," and "BAD" indicates "creases have occurred."

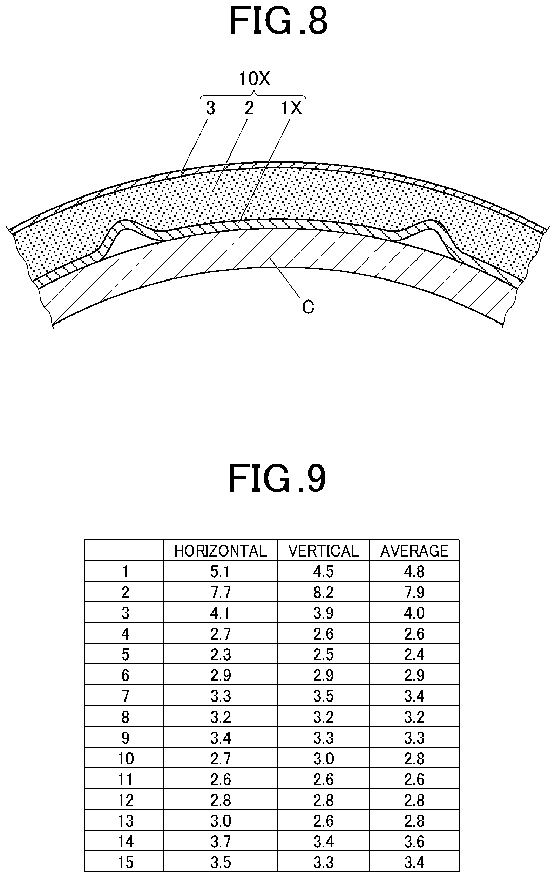

Also, FIG. 8 shows the crease occurrence state of the vehicle interior skin material of samples (1) to (3) as an enlarged cross-sectional view. In FIG. 8, the vehicle interior skin material is described as code 10X, and the back base cloth is described as code 1X.

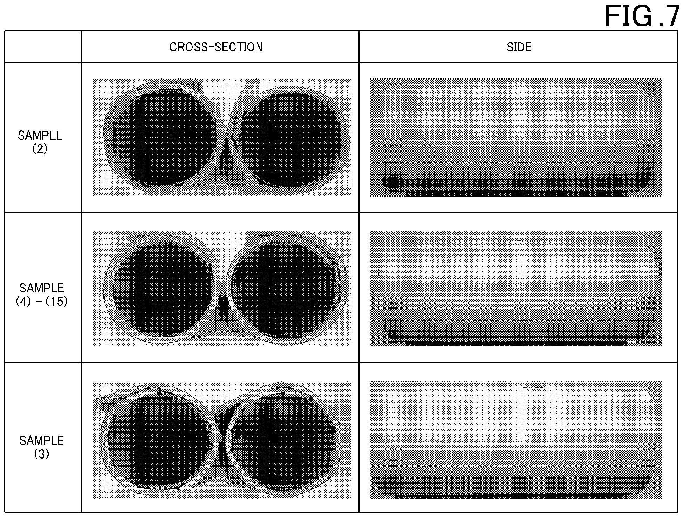

Furthermore, FIG. 6 shows the results of plotting the values of shear angle φ and shear load F when creases occur or just before the occurrence in each sample (1) to (15) on a line diagram with shear load F on the horizontal axis and shear angle φ on the vertical axis. Also, FIG. 7 shows the state where each sample (2) to (15) is wrapped around the core C and viewed from the center line direction of the core C (described as cross-section ) and the state viewed from the radial outside of the core C (described as side). In FIG. 7, the sample (2) is displayed at the top, samples (4) to (15) in the middle, and the sample (3) at the bottom.

Note that since the sample (4) to the sample (15) are almost the same visually, the state of the sample (4) is displayed as a representative example.

As described in the "wrapping crease" column in FIG. 5, creases occurred on the vehicle interior skin material in samples (1) to (3). As shown in FIG. 7 and FIG. 8, the vehicle interior skin material of these samples (1) to (3) shows that creases occur in the back base cloth, and creases due to creases in the back base cloth occur in the top layer on the outer peripheral surface side.

Meanwhile, for samples (4) to (15), creases do not occur on the back base cloth, so creases do not occur in the top layer, and it can be seen that the peripheral surface is smooth.

Also, as shown in FIG. 6, it can be seen that samples (4) to (15) that do not cause creases have a shear load F of 17.5 [gf/cm] or less, and are concentrated within a range where the shear angle φ is 6.4 [°] or more and 8.0 [°] or less.

Also, it was found that even when the shear load F is 17.5 [gf/cm] or less, when the shear angle φ is less than 6.4 [°], the occurrence of creases cannot be avoided, as shown in the sample (3), and when the shear load F becomes larger than 17.5 [gf/cm] even when the shear angle φ is 6.4 [°] or more and 8.0 [°] or less, the occurrence of creases cannot be avoided as shown in the sample (1).

### [Shear Stiffness Of Each Sample]

For vehicle interior skin materials for samples (1) to (3), which are comparison examples above, and vehicle interior skin materials for samples (4) to (15), which are examples of the present invention, the shear angle φ and shear load F are measured according to the method for measuring shear characteristics described above, and the average of all shear stiffness G within the measurement range in measurement (hereafter simply referred to as "shear stiffness G") was calculated.

Note, here, the vehicle interior skin material was measured horizontally and vertically, and shear stiffness G was calculated for each.

FIG. 9 is a chart listing the average values of horizontal shear stiffness G, vertical shear stiffness G, and horizontal and vertical shear stiffness G in vehicle interior skin materials for samples (1) to (15).

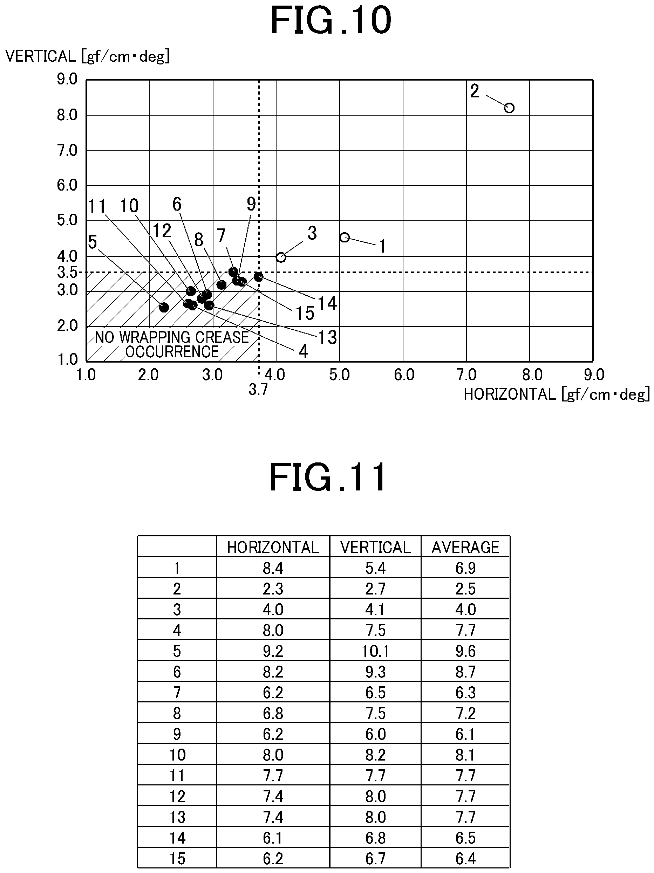

Also, FIG. 10 shows the results of plotting the vehicle interior skin material of samples (1) to (15) on a line diagram with the horizontal axis as the value of shear stiffness G in the horizontal direction and the vertical axis as the value of shear stiffness G in the vertical direction.

As shown in FIG. 10, it can be seen that samples (4) to (15) that do not cause creases are concentrated within a range where the value of shear stiffness G in the horizontal direction is 3.7 [gf/ (cm·degree)] or less, and the value of shear stiffness G in the vertical direction is 3.5 [gf/ (cm·degree)] or less.

Meanwhile, in the comparison example samples (1) to (3), it can be seen that the value of shear stiffness G in the horizontal direction is greater than 3.7 [gf/ (cm· degree)], and the value of shear stiffness G in the vertical direction is concentrated within a range where the value of shear stiffness G in the vertical direction is greater than 3.5 [gf/ (cm·degree)].

### [Tensile Strain Of Each Sample]

For vehicle interior skin materials for samples (1) to (3), which are comparison examples above, and vehicle interior skin materials for samples (4) to (15), which are examples of the present invention, tensile strain εₘ were measured according to the tensile strain measurement method described above.

Note, here, measurements were performed in the horizontal and vertical directions of the vehicle interior skin material, and tensile strain εₘ was measured for each.

FIG. 11 is a chart listing the average values of horizontal tensile strain εₘ, vertical tensile strain εₘ, and horizontal and vertical tensile strain εₘ in vehicle interior skin materials for samples (1) to (15).

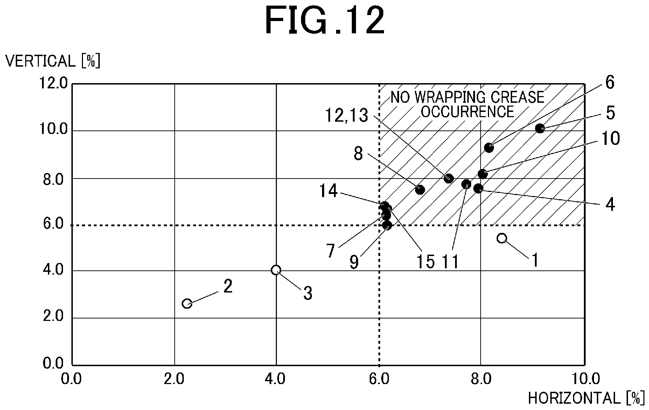

Also, FIG. 12 shows the results of plotting the vehicle interior skin material of samples (1) to (15) on a line diagram with the horizontal axis as the value of tensile strain εₘ in the horizontal direction and the vertical axis as the value of tensile strain εₘ in the vertical direction.

As shown in FIG. 12, it was found that samples (4) to (15) that do not cause creases are concentrated within the range where the value of lateral tensile strain εₘ is 6.0 [%] or higher, and the value of tensile strain εₘ in the vertical direction is 6.0 [%] or more.

Meanwhile, in the samples (2) and (3) in the comparison example, the values of tensile strain εₘ in both the horizontal and vertical directions were less than 6.0 [%], and in the sample (1), the value of tensile strain εₘ in the horizontal direction was 6.0 [%] or more, but the value of tensile strain εₘ in the vertical direction was less than 6.0 [%].

Thus, for tensile strain εₘ of the vehicle interior skin material, it was found that the conditions where creases do not occur is that the values of tensile strain εₘ in both the horizontal and vertical directions are 6.0 [%] or more.

### [Application Of Vehicle Interior Skin Material To Vehicle Seats]

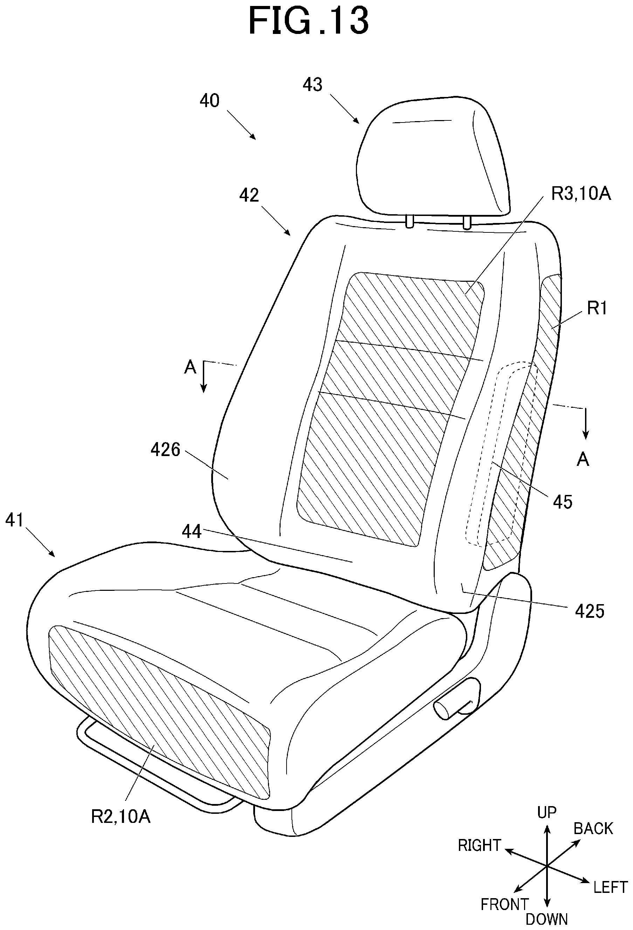

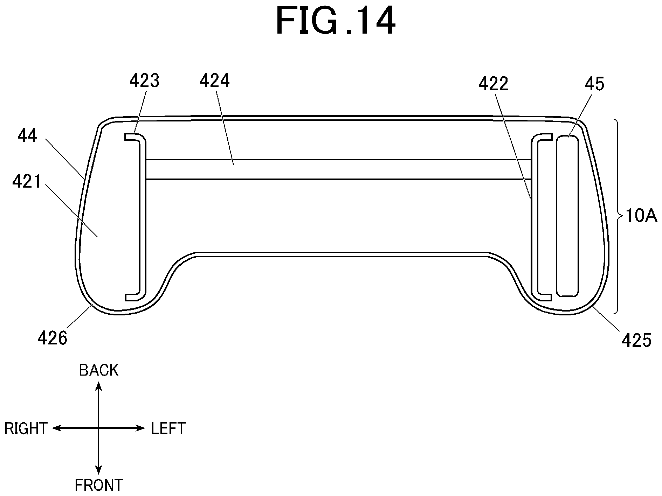

FIG. 13 is a perspective view of a car seat 40 as a vehicle seat with a car interior skin material 10A applied as a vehicle interior skin material, and FIG. 14 is a cross-sectional view of a car seat 40 along the A-A line in FIG. 13. Note, in FIG. 13 and FIG. 14, with the seated person seated on the car seat 40, the left hand side of the seated person is described left, the right hand side is described right, the front is described front, and the back is described back, vertically upward is described up, and vertically downward is described down.

The seat shown in FIG. 13 is a vehicle seat, and in particular, it is a car seat 40 provided in a car such as an automobile, and an occupant of the car sits on it.

As shown in the figure, the car seat 40 includes a seat cushion 41 that supports the hips and thighs of an occupant, a seat back 42 whose lower end part is supported by the seat cushion 41 to serve as a backrest, and a headrest 43 provided at the upper end part of the seat back 42 to support the occupant's head. Furthermore, auxiliary support parts such as necklaces, armrests, footrests, ottomans, and the like, may also be provided.

The seat cushion 41 has a cushion pad and a cushion frame not shown. The seat back 42 has a seat back frame and a cushion pad 421.

The car seat 40 has a skin 44 covering the seat back 42 and the seat cushion 41.

Here, a car interior skin material 10A is used as part of the skin 44. Note that the car interior skin material 10A is the same as the vehicle interior skin material 10 described above.

As shown in FIG. 14, the seat back frame of the seat back 42 has left and right back side frames 422, 423 arranged at intervals from each other, an unillustrated upper pipe frame connecting the upper end parts of the left and right back side frames 422, 423, and a lower frame 424 connecting the lower end parts of the left and right back side frames 422, 423.

Also, the seat back 42 has bulges 425, 426 formed at the left end part and the right end part and formed of convexities along the vertical direction by the cushion pad 421 wrapping the left and right back side frames 422, 423.

An airbag device 45 as an occupant protection device is attached to the left/right outside (left side) of the left-side backside frame 422 inside the left-side bulge 425. The airbag device 45 is wrapped in the cushion pad 421 along with the back side frame 422.

The airbag device 45 stores the configuration of the device in a somewhat flat housing in the left and right directions.

The skin 44 uses a car interior skin material 10A in part, and overall, a car interior skin material other than the car interior skin material 10A is used. As for the car interior skin material for the skin 44, the back base cloth 1 is replaced with a conventional back base cloth for the vehicle interior skin material 10 described above. Conventional back base cloths are equivalent to any of samples (1) to (3) shown as comparative examples in the examples described above.

Also, a car interior skin material 10A having the same configuration as the vehicle interior skin material 10 described above is used for only a predetermined part of the skin 44.

The skin 44 is configured by sewing a plurality of car interior skin material parts together with a plurality of sewing lines so that the parts covering the bulges 425, 426 described above can cover them in accordance with the surface shape of the bulges 425, 426.

Also, the car interior skin material 10A is used as a part covering a region R1 (oblique line area in FIG. 13) which is the left side surface part of the left side bulge 425 and spans almost the entire left side surface of the seat back 42.

The region R1 is the surface of the cushion pad 421 that wraps around the airbag device 45 and the left back side frame 422, and corresponds to a position facing the left surface of the housing of the built-in airbag device 45 from the left side.

When the airbag device 45 is operated, the airbag is discharged forward from the left end part of the bulge 425 on the left side and expands to protect the seated person. At that time, the airbag is discharged forward by breaking through a sewing line on the front side edge of the car interior skin material 10A covering the region R1 and forming a boundary with other car interior skin materials.

As shown in the various samples (4) to (15) described above, the car interior skin material 10A has excellent shear characteristics and high stretchability. Thus, the car interior skin material 10A can exhibit high durability against airbags that expand inside the skin 44 and are discharged to the outside. Also, since it faces the airbag device 45 on its left side, which is completely covered, it is possible to resist the inflated airbag and properly guide it forward while suppressing the airbag from jumping out to the left.

Note that the airbag device 45 may be arranged on the right side of the right back side frame 423. In this case, the car interior skin material 10A may be arranged so as to cover a position facing, from the right side, the right surface of the housing of the built-in airbag device 45 which is the surface of the cushion pad 421 wrapping the airbag device 45 and the right side back side frame 423.

Also, the car seat 40 may be used in a relaxed state in a posture where, for example, the seat back 42 is tilted backwards and the front end part of the seat cushion 41 is raised diagonally upward.

When use in such a posture is expected, a configuration is adopted in some cases in which an airbag device is built into the front end part of the seat cushion 41, and an airbag is discharged upward from the front end part of the seat back 42, to protect a seated person in a relaxed state.

In the case of such a configuration, a car interior skin material 10A may be applied to the region R2 of the front end surface of the seat cushion 41.

In this case, the car interior skin material 10A is arranged facing the front side of the airbag device. Thus, the airbag discharged from the front end part of the seat cushion 41 is suppressed from jumping forward and can be properly guided upward.

Also, the car seat 40 contains, for example, an expandable bag body built into the front side of the seat back 42, and may be provided with an occupant support device that supports the back of a seated person by expanding the bag body.

In the case of such a configuration, car interior skin material 10A may be applied to the arrangement region R3 of the occupant support device on the front surface of the seat back 42.

In this case, the car interior skin material 10A is arranged facing on the front side of the occupant support device. Thus, even when the bag body of the occupant support device expands and irregularities occur, the car interior skin material 10A can maintain a state where the front surface of the seat back 42 is covered in response to deforming irregularities while suppressing the occurrence of creases due to its shear characteristics and high stretchability.

### [Technical Effects of Embodiments of Invention]

The vehicle interior skin material 10 and the car interior skin material 10A suppress the occurrence of creases by setting the shear angle and load within the numerical range described above suitable for the shear characteristics of the laminated body, and can cover the surface of a three-dimensional object with excellent appearance.

In particular, when the car interior skin material 10A is applied to the car seat 40, curved surfaces such as the side of the bulge 425 can also be covered by suppressing creases.

Also, as long as the shear angle and load are within an appropriate numerical range, the vehicle interior skin material 10 and the car interior skin material 10A can cover the surface of the object by suppressing creases without setting the strength of the skin material low, so it is possible to maintain high strength. In particular, since it consists of a laminated body with a back base cloth 1 bonded to the base material, it is also possible to maintain high strength of the vehicle interior skin material 10 and the car interior skin material 10A with the back base cloth 1.

Also, as for the vehicle interior skin material 10 and the car interior skin material 10A, since the back base cloth 1 is composed of processed yarns, it is easy to impart elasticity to the vehicle interior skin material 10 and the car interior skin material 10A, and the occurrence of creases caused by the back base cloth 1 can be reduced.

Also, since the back base cloth 1 is a warp knitted fabric composed of warp yarns, it is possible to ensure elasticity in a predetermined direction while maintaining strength with a strong weave, and improve bending processability. Thus, the vehicle interior skin material 10 and the car interior skin material 10A have good followability to the curved surface of the car seat 40, and can perform covering by suppressing the occurrence of creases.

Also, the vehicle interior skin material 10 and the car interior skin material 10A can have moderate bending processability while ensuring high strength by setting the fineness of all warp yarns of the back base cloth 1 to 100 denier.

Also, the car seat 40 is covered with a car interior skin material 10A at a position facing the built-in airbag device 45.

Thus, since the surface of the car seat 40 is covered while suppressing the occurrence of creases, it is possible to maintain high appearance design.

Furthermore, due to the shear characteristics and elasticity of the car interior skin material 10A, strength is moderately exhibited even when the airbag device 45 is operated, so the car interior skin material 10A is not destroyed, the airbag can be guided in an appropriate direction by maintaining the posture of the airbag device 45, and its function can be exhibited normally and effectively.

Also, in the vehicle seat 40, since the car interior skin material 10A covers the left side of the cushion pad 421 which is positioned facing the airbag device 45, the vehicle interior skin material is effectively resistant to the pressurization of the airbag applied through the cushion pad 421 when the airbag device 45 is operated, and the airbag can be guided in an appropriate direction, and its function can be exhibited normally and effectively.

Also, since the region R3 covering the occupant support device can be covered with the car interior skin material 10A to cover the car seat 40, the car interior skin material 10A can follow the irregularities that expand and deform within the region R3 caused by the occupant support device and can perform covering while suppressing the occurrence of creases.

Also, since the car seat 40 contains a car interior skin material 10A as part of the skin 44 formed by a plurality of sewing lines covering the bulge 425, the shear characteristics of the car interior skin material 10A suppress the occurrence of creases on the entire skin 44, enabling the covering while maintaining followability to the surface of the bulge 425. Also, since the use of the car interior skin material 10A is suppressed to part of the skin 44, it is possible to reduce the manufacturing cost of the skin 44.

### [Others]

Each embodiment of the present invention has been described above. However, the present invention is not limited to the above embodiments. For example, in an embodiment, components integrally formed by a single member may be replaced by components divided into a plurality of members and connected or fixed to each other. Also, a component formed by connecting a plurality of members may be replaced with a component integrally formed by a single member. In addition, details shown in embodiments can be changed as appropriate to the extent that they do not deviate from the purpose of the invention.

Also, if the shear characteristics of the vehicle interior skin material 10 satisfy the conditions described above, materials other than the foam layer 2 or PVC top layer 3 may be used as the material of base material. Also, if the shear characteristics satisfy the conditions described above, the back base cloth 1 may also be used with other materials.

Also, if the shear characteristics of the vehicle interior skin material 10 satisfy the conditions described above, the back base cloth 1 may be a horizontally knitted fabric using weft or a fabric using weft and warp yarn.

Furthermore, the warp yarn for the back base cloth 1 is not limited to polyester, but may also be warp yarn made of other resins, for example, nylon. Also, the warp yarn for the back base cloth 1 exemplifies and is not limited to fineness of 100 denier. As for warp yarn, 100 denier is the preferred fineness, but if it is in the range of 75 denier or more and 100 denier or less, suitable shear characteristics of the vehicle interior skin material 10 can be guaranteed.

Also, in the embodiment described above, the car interior skin material 10A is shown as an example of covering a car seat 40, but not limited to this, and it can suitably perform covering even when used to cover parts other than the seat inside the car.

Also, a case where a car interior skin material 10A is used for a specific part of a car seat 40 is shown, but the car interior skin material 10A may be used to cover other parts, and the entire car seat 40 may be covered with the car interior skin material 10A.

### Industrial Applicability

The present invention is industrially applicable for vehicle interior skin materials and vehicle seats.

### Reference Signs List

1,1X back base cloth
2 foam layer (base material)
3 top layer (base material)
10 vehicle interior skin material
10A car interior skin material (vehicle interior skin material)
40 car seat (vehicle seat)
41 seat cushion
42 seat back
43 headrest
44 skin
45 airbag device (occupant protection device)
421 cushion pad
422, 423 back side frame
425,426 bulge
C core
F shear load
H1, H2 chuck
R1 to R3 arrangement region
εₘ tensile strain
φ shear angle

## Claims

1. A vehicle interior skin material, wherein
the vehicle interior skin material is a laminated body with a back base cloth bonded to a base material, and
regarding shear characteristics of the laminated body, the vehicle interior skin material satisfies all conditions that
a shear angle is 6.4 [degree] or more and 8.0 [degree] or less, and
a load is 17.5 [gf/cm] or less.

2. The vehicle interior skin material according to claim 1, wherein the back base cloth is composed of a processed yarn.

3. The vehicle interior skin material according to claim 1, wherein the back base cloth is a warp knitted fabric composed of a warp yarn.

4. The vehicle interior skin material according to claim 3, wherein the warp yarn has a total fineness of 75 denier or more and 100 denier or less.

5. A vehicle seat, wherein the vehicle seat is covered with the vehicle interior skin material according to claim 1 at at least a position facing a built-in occupant protection device.

6. The vehicle seat according to claim **5,** wherein part or all of a cushion pad at the position facing the occupant protection device is covered with the vehicle interior skin material.

7. The vehicle seat according to claim 5, wherein a mounted occupant support device is covered with the vehicle interior skin material.

8. The vehicle seat according to claim **5,** wherein a bulge is covered with a skin formed by a plurality of sewing lines, and at least part of the skin is composed of the vehicle interior skin material.
